# EUROPEAN PATENT SPECIFICATION

(11) **EP 1 157 055 B1**
(45) Date of publication and mention of the grant of the patent: **14.12.2005**
(21) Application number: 99964587.2
(22) Date of filing: 17.12.1999
(51) Int. Cl.: C08G 18/48, C08G 18/10, C08K 5/00, C08K 5/12, C08K 5/51

(54) **THERMOSETTING POLY URETHANE/UREA-FORMING COMPOSITIONS**
AUSHÄRTENDE, POLYURETHAN-POLYHARNSTOFF BILDENDE ZUSAMMENSETZUNGEN
COMPOSITIONS THERMODURCISSANTES DE FORMATION DE POLYURETHANNE-UREE

(30) Priority: 17.12.1998 US 112656 P
(43) Date of publication of application: 28.11.2001
(73) Proprietor: CROMPTON CORPORATION, Middlebury, CT 06749 (US)
(72) Inventor: ARNOUX, Didier, F-11230 Chalabre (FR); JONES, Crispin, Frank, Maxwell, Linton, Cambridge CB1 6NE (GB); ROSENBERG, Ronald, Owen, Orange, CT 06477 (US)
(74) Representative: Spott, Gottfried
(86) International application number: PCT/EP1999/010040
(87) International publication number: WO 2000/035983

(56) References cited:
- EP-A- 0 376 674
- FR-A- 2 764 893
- US-A- 3 980 606
- US-A- 5 688 892
- DATABASE WPI Section Ch, Week 199408 Derwent Publications Ltd., London, GB; Class A25, AN 1994-062111 XP002132421 & JP 06 016767 A (BANDO CHEM IND LTD), 25 January 1994 (1994-01-25)

## Description

This invention relates to casting polyurethane and/or poly urethane/urea-forming products capable of room temperature curing. More particularly, the invention is drawn to liquid compositions containing isocyanate-functional prepolymers, an aromatic amine curative therefore and a non-volatile phosphate or phthalate plasticizer. The selected poly urethane/urea-forming compositions produce, after room-temperature cure, non-sweating, non-distorting castings or boards with superior elasticity, toughness, tear strength and abrasion resistance.

### BACKGROUND OF THE INVENTION

Aromatic polyisocyanates are well known and are widely used in the preparation of polyurethane and poly urethane/urea elastomers. These aromatic diisocyanates generally include compositions such as 2,4-toluene diisocyanate, 2,6-toluene diisocyanate, 4,4'-methylene bis (phenylisocyanate) and the like. In the preparation of polyurethane and polyurethane/urea elastomers, the aromatic diisocyanates are reacted with a long chain (high molecular weight) polyol to produce a prepolymer containing free isocyanate groups which then may be chain extended with a short chain (low molecular weight) polyol or aromatic diamine to form a polyurethane or polyurethane/urea elastomer. Long chain, high molecular weight polyols, e.g. those having a molecular weight of above 250, are generally utilized to form the prepolymer and the chain extender is generally a short chain polyol, e.g., C₂ -C₁₀ polyol, or an aromatic diamine. The long chain, high molecular weight polyol provides flexibility and elastomeric properties to the resin, while the short chain polyol or aromatic diamine provides chain extension or cross-links and adds toughness and rigidity to the resulting elastomeric polymer.

A major problem with mononuclear aromatic diisocyanates, such as, toluene diisocyanate, relates to the perceived health risks and their volatility. It is known that residual toluene diisocyanate (free toluene diisocyanate) in a prepolymer mixture can be reduced by lowering the isocyanate/hydroxyl ratio of the prepolymer mixture. This modification, however, has a detrimental effect on processing when the prepolymer is chain extended (or cured), namely, the hardness build up rate decreases very significantly, which leads to an extended demolding time. The prepolymer viscosity also builds up to levels which prevent processability at ambient temperatures.
Alternatively, it is also known that residual toluene diisocyanate may be physically removed from a prepolymer by vacuum distillation or other methods.

It is also known that by incorporating 2.4 toluene diisocyanate dimer into a prepolymer mix, a low NCO/OH ratio can be used to obtain the desired low residual free toluene diisocyanate content while maintaining the desired hardness build up rate. Such a composition is described in U.S. Pat. No. 5.077.371. which is incorporated herein by reference. The prepolymer's viscosity is measured at 100°C and cured at temperatures in excess of 100°C using 4,4'-methylene-bis(3-chloro)aniline. No phosphate ester plasticizers or room temperature curing are described or contemplated by the teachings in the '371 Patent. There is a need for a poly urethane/urea forming composition having a low free toluene diisocyanate content that is capable of being cast and cured at room temperatures.

Plasticizers are commonly used for polyurethane foaming compositions to modify the foam properties or ease processing as described in U.S. Pat. No. 5,817,860. Examples of plasticizers set forth therein are dioctyl phthalate, diisooctyl phthalate, dimethyl phthalate, dibutyl phthalate, tributyl phosphate, triphenyl phosphate, cresyl diphenyl phosphate, halogenated biphenyls and aromatic oils.

U.S. Pat. No. 5,688,892 describes a waterproofing formulation based upon a cold setting polyurethane formulation using a selected aromatic diamine curative and plasticizers and a toluene diisocyanate reacted with a polyoxypropylene or polyoxyethylene polyol. The plasticizer used therein is dioctyl phthalate.

Published European patent application 829,497 describes a polyurethane casting composition based on an isocyanate or isocyanate-function prepolymer, selected aromatic amine curative with a relatively low polarity and hydrocarbon oils as a plasticizer.

EP-A-376674 describes a specific process for manufacturing a solvent less spray urethane elastomer. Various additives, including plasticizers, may be included. JP 06 016 767 discloses compositions containing a urethane prepolymer and a plasticizer conventionally used in polyurethane chemistry.

Many conventional plasticizers, however, are either too volatile, which leads to dimensional instability, or become physically incompatible after cure, or have insufficient viscosity reducing effect. The present invention overcomes these obstacles to produce a desired room temperature curable poly urethane/urea-forming product having a low free toluene diisocyanate content.

### SUMMARY OF THE INVENTION

The present invention is, in one embodiment, drawn to a poly urethane/urea-forming casting composition that can be cast and cured at temperatures between 15 and 35°C using a reaction mixture of (a) an isocyanate component or an isocyanate functional prepolymer having at least two isocyanate groups per molecule that contains or has been reacted with polytetramethylene glycol, (b) an aromatic amine curative, and (c) a phosphate ester having a vapor pressure of less than 100 mPa at 25°C and being represented by formulae IIA or III below. Component (a) is preferably a low free toluene diisocyanate prepolymer blend. Component (a) more preferably is a prepolymer blend that is a reaction mixture of an organic diisocyanate and polytetramethylene glycol. The casting composition can further include a polyether- and/or polyester polyol having a number average molecular weight of at least 250.

The aromatic amine curative is preferably selected from the group consisting of diethyl toluene diamine, tertiary butyl toluene diamine, dimethylthiotoluene diamine, , and 1.2-bis(2-aminophenylthio)ethane.

The phosphate ester is represented by formulae (IIA) or (III): 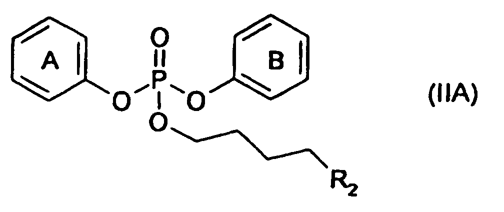 wherein R₂ is hydrogen or unsubstituted or alkyl-substituted C₂-C₆alkyl. and aromatic rings A and B independently of one another can have one or more alkyl substitutions; 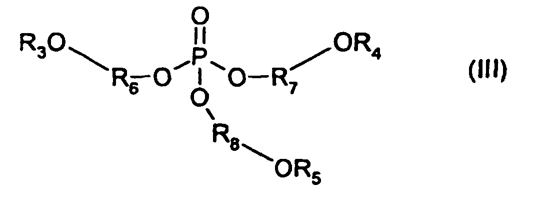 wherein R₃, R₄, R₅, independently from one another, are unsubstituted or alkyl substituted C₁-C₅ alkyl and R₆, R₇ and R₈ are independently of one another are unsubstituted or alkyl-substituted C₁-C₅alkylene. More preferably, component (c) is tributoxyethyl phosphate or isodecyl diphenyl phosphate.

The present invention, in a further embodiment, is drawn to a cast polyurethane obtainable by a process comprising reacting (a) an isocyanate component or an isocyanate functional prepolymer having at least two isocyanate groups per molecule that contains or has been reacted with polytetramethylene glycol, (b) an aromatic amine curative, and (c) a phosphate ester as defined above. Component (a) can be a prepolymer blend resulting from a reaction mixture of an organic diisocyanate and polytetramethylene glycol. The aromatic amine curative used to obtain cast polyurethane is selected from the group consisting of diethyl toluene diamine, tertiary butyl toluene diamine, dimethylthiotoluene diamine, and 1,2-bis(2-aminophenylthio)ethane. The reactants for obtaining the desired cast polyurethane can further include a polyether and/or polyester polyol having a number average molecular weight of at least 250.

The present invention is drawn to a still further embodiment of a process for curing a poly urethane/urea-forming composition comprising contacting said poly urethane/urea-forming composition at a temperature between 15 and 35°C with (a) an aromatic amine curative having at least two primary amine groups, and (b) a plasticizer as defined above with said poly urethane/urea-forming composition.

### DETAILED DESCRIPTION OF THE INVENTION

The isocyanate used in this invention is an isocyanate having an average functionality of two or more isocyanate groups per molecule. Examples of suitable diisocyanates are 2,4-toluene diisocyanate, 4,4-diphenylmethane diisocyanate, mixtures of diphenylmethane diisocyanate, paraphenyldiisocyanate, isophoronediisocyanate, 4,4'-methylene-bis(cyclohexylisocyanate), naphthalene diisocyanate and hexamethylene diisocyanate and chain extended prepolymer blends. An alkylene diamine or diol can be reacted with an excess of the isocyanate component to produce such a chain extended prepolymer blends.

In a preferred embodiment, a low-free toluene diisocyanate prepolymer is made by reacting toluene diisocyanate with high molecular weight aliphatic polyester or polyether polyols to produce a prepolymer having a toluene diisocyanate content below 0.4% by weight, optionally by removal of excess toluene diisocyanate. Optionally, a mixture of a low molecular weight polyol (number average molecular weight less than 250) and a high molecular weight polyol (number average molecular weight of at least 250) can also be reacted with the toluene diisocyanate.

Representative toluene diisocyanates include the two main isomers, 2,4- and 2,6-diisocyanate and optionally, a small amount of the ortho isomers, the 2,3- and 3,4-isomers. Commercially, toluene diisocyanate is found as a 65:35, 80:20 or 99:1 isomer mix of the 2,4- and 2,6-isomer by weight and optionally from 0-5% by weight of the ortho isomers. An isomer mix is preferred within a range of from about 65-100% of the 2,4-isomer and the balance (0-35%) being essentially the 2,6-isomer. The most preferred range of the 2,6-isomer is 20-35%.

The 2,4-toluene diisocyanate dimer can be added to the selected organic diisocyanate(s) in an amount ranging up to the dimer's solubility limit at about 80°C to form an isocyanate blend. Preferably the dimer is present at up to about 6.0% by weight of the isocyanate blend, that is, the mixture of the toluene diisocyanate dimer and the selected organic diisocyanate(s). More preferably up to about 4.0% by weight of dimer may be present in the isocyanate blend.

High molecular weight polyols, particularly polyether polyols or polyester polyols having a number average molecular weight of at least 250, can be used to prepare the prepolymer of the instant invention. Polyols having a number average molecular weight of about 650 to 3000 are preferred, with polyols having number average molecular weights of 1000 being the most preferred. The number average molecular weight of the high molecular weight polyol can be as high as 10,000 or as low as 250. Preferred polyether polyols are polyalkyleneether polyols represented by the general formula HO(RO)ₙH, wherein R is an alkylene radical and n is an integer large enough that the polyether polyol has a number average molecular weight of at least 250. These polyalkyleneether polyols are well-known components of polyurethane products and can be prepared by the polymerization of cyclic ethers such as alkylene oxides and glycols, dihydroxyethers, and the like by known methods. A particularly preferred high molecular weight polyol is polytetramethylene glycol.

Polyester polyols are prepared by reaction of dibasic acids (usually adipic acid but other components such as sebacic or phthalic acid may be present) with diols such as ethylene glycol, 1,2-propylene glycol, 1,4-butylene glycol and diethylene glycol, etc., where linear polymer segments are required, or include units of higher functionality such as glycerol, trimethylol propane, pentaerythritol, sorbitol, etc., if chain branching or ultimate cross-linking is sought. Some polyester polyols also employ caprolactone and dimerized unsaturated fatty acids in their manufacture. Another type of polyester which is of interest is that obtained by the addition polymerization of e-caprolactone in the presence of an initiator. Other polyols that can be used are those that have at least two hydroxyl groups and whose basic backbone is obtained by polymerization or copolymerization of such monomers as butadiene and isoprene monomers.

The initial polyol portion for making a prepolymer blend of the instant invention can be combination of high molecular weight polyol, as previously described, and a low molecular weight polyol. An aliphatic glycol is the preferred low molecular weight polyol. Suitable aliphatic polyols are ethylene glycol, diethylene glycol, dipropylene glycol, neopentyl glycol, 1,3-butanediol, 1,4-butanediol, and the like. The most preferred low molecular weight polyol is 1,4-butanediol. In general, the weight of the low molecular weight polyol should be no more than 20% of the combination of high molecular weight polyol and low molecular weight polyol. The preferred range is 0 to 15% of the combination; more preferred is 0-8%.

The prepolymers are preferably prepared by loading toluene diisocyanate, then adding the polyol or initial polyol blend, maintaining the temperature at from room temperature to temperatures as high as 150°C for sufficient time to react all of the available hydroxyl groups, then removing unreacted toluene diisocyanate by vacuum distillation or other physical means. Preferred reaction temperatures are 50°C to 100°C; more preferred temperatures are 50°C to 85°C. The product is poured into containers under a nitrogen flush and stored at room temperature. A particularly preferred prepolymer is commercially available from Uniroyal Corporation under the tradename Adiprene® LF 750D.

The stoichiometric ratio of isocyanato groups to hydroxyl groups in the reactants should preferably be from 2/1 to 30/1 although somewhat lower and higher ratios are permissible. When the ratio is much lower, the molecular weight of the isocyanato terminated polyurethane becomes so large (due to formation of oligomers with more than one polyol moiety) that the viscosity of the mass makes mixing of chain extenders into the prepolymer relatively more difficult. At the other extreme, an excess approaching the 30/1 ratio will result in high levels of free diisocyanate in the mixture (with higher removal costs). Therefore, the preferred range is 2.5/1 to 10/1.

The curative used with the prepolymer described above is an organic aromatic polyamine having two or more amine groups. The organic aromatic polyamine can be combined with polyether- and/or polyester-polyols described above to modify the final product or cure characteristics. Of course, known catalysts can be used in conjunction with the curative if necessary.

Examples of aromatic polyamine materials are: diethyl toluene diamine (DETDA), tertiary butyl toluene diamine (TBTDA), dimethylthiotoluene diamine (Ethacure™ 300) from Alberrnarie Corporation, trimethylene glycol di-p-aminobenzoate (Vibracure™ A157 from Uniroyal Chemical Company or Versalink™ 740 from AirProducts and Chemicals Inc.), and 1,2-bis(2-aminophenytthio)ethane (Cyanacure from American Cyanamid Company). The most preferred aromatic polyamine is dimethylthiotoluene diamine.

The castable composition combines the isocyanate component and/or prepolymer blend and curative described above with a plasticizing agent having a vapor pressure at 25°C of less than 100 mPa and, preferably, an evaporation rate of <40% after 24hours at 87°C according to ASTM 1203-67.

Representative compounds falling with formula (IIA) are pentyl diphenyl phosphate, hexyl diphenyl phosphate, heptyl diphenyl phosphate, nonyl diphenyl phosphate and C₁-C₃alkyl substituted compounds thereof, such as isodecyl diphenyl phosphate (Santicizer 148) and 2-ethylhexyl diphenyl phosphate (Santicizer 141, Solutia) and Santicizer 2148 (Solutia).

Representative monomers falling with formula (III) are tris(methoxymethyl)phosphate, tris(ethoxymethyl)phosphate, tris(propoxymethyl)phosphate, tris(butoxymethyl)phosphate, tris(pentoxymethyl)phosphate; tris(2-methoxyethyl)phosphate, tris(2-ethoxyethyl)phosphate, tris(2-propoxyethyl)phosphate, tris(2-butoxyethyl)phosphate, tris(2-pentoxyethyl)phosphate; tris(methoxypropyl)phosphate, tris(ethoxypropyl)phosphate, tris(propoxypropyl)phosphate, tris(butoxypropyl)phosphate, tris(pentoxypropyl)phosphate; tris(methoxybutyl)phosphate, tris(ethoxybutyl)phosphate, tris(propoxybutyl)phosphate, tris(butoxybutyl)phosphate, tris(pentoxybutyl)phosphate; tris(methoxypentyl)phosphate, tris(ethoxypentyl)phosphate, tris(propoxypentyl)phosphate, tris(butoxypentyl)phosphate and tris(pentoxypentyl)phosphate. Isodecyl diphenyl phosphate is the most preferred.

The casting composition of the present invention is a mixture of the isocyanate component and/or isocyanate functional prepolymer blend, an aromatic amine curative, selected plasticizer(s) and optionally additional polyether- and/or polyester-polyol, and/or diisocyanate dimer. The mixture preferably contains about 40-80% by weight of an isocyanate functional prepolymer with an isocyanate content between 4 and 15% formed by the reaction of toluene diisocyanate with at least one polyol; 7-20% by weight of an aromatic polyamine; 6-30% by weight of the phosphate ester plasticizer having a vapor pressure at 25°C of less than 100 mPa, and optionally, 0-20% by weight of uretdione diisocyanate (poly-HDI). In a more preferred embodiments, the isocyanate functional prepolymer blend has a free toluene diisocyanate content below 0.4%, most preferably below 0.1%.

A wide variety of fillers, dyes, and pigments can be used in the formulations described above. Examples of suitable fillers are calcium carbonate, clays, talcs, zinc oxide, titanium dioxide, and silica. The amount of filler usually is in the range of 0 to 800 parts per hundred by weight, depending on the application for which the formulation is intended.

Stabilizers known in the art can also be incorporated into the composition. The stabilizers may be for protection during the life of the finished product against, for example, oxygen, ozone, and ultra-violet radiation. Stabilizers can also be incorporated to protect against thermooxidative degradation during processing. Antioxidants and UV inhibitors that would otherwise interfere with the urethane curing process should be avoided. Preferred antioxidants are sterically hindered phenolic compounds. Stabilizers such as organic phosphites are also useful. Preferred UV inhibitors are benzotriazole compounds.

For curing these prepolymers, the number of -NH₂ groups in the aromatic diamine component should be approximately equal to the number of -NCO groups in the isocyanate component and/or prepolymer blend. A small variation is permissible but in general from about 80 to 110% of the stoichiometric equivalent should be used, preferably about 85 to 100%.

The castable compositions described herein can be prepared by mixing the selected polyol(s) chain extenders with the isocyanate component and/or isocyanate functional preopolymer. The resulting chain extended product can then be used immediately or stored under a nitrogen blanket until such time that a casting is desired. The selected aromatic amine curative can be separately combined with the plasticizer and stored. Once a casting is desired, the chain extended product is combined with the aromatic amine curative and plasticizer and poured into a mould for curing and post-curing, if necessary.

Applications for cast elastomers include, potting and encapsulants, pipe seals, athletic surfaces, binders, drop hammer tools, prototype parts, foundry core boxes, pattern plates, bumping tools, working models for the ceramic industry and other moulded articles resulting cast mouldings. The present invention, therefore, further relates to moulded articles resulting from the formulations described herein. Preferably, the moulded article is free of any fiber reinforcing materials, such as carbon fibers, and yet exhibits a Shore D hardness in excess of about 45, more preferably in excess of about 50.

The following examples are illustrative of the present invention and are therefore not intended as a limitation on the scope thereof.

### Example 1

The following components are combined in a closed vessel at ambient pressure and temperature. The components are intimately mixed for a sufficient time to produce a homogenous mixture, at which time the physical properties are determined.

### Components

ADIPRENE LF750D 76.86g
Isodecyl diphenyl phosphate 23.02g
BYK A530 0.12g (degassing aid)
Dimethylthiotoluene diamine 17.00g

At 25°C viscosity of mixture is 3500 - 4000 mPas
Properties after curing at 25°C for 7days:
Shore D hardness (ISO 868) 50 - 53
Tensile strength (ISO527) 20 - 25 MPa
Elongation at break (ISO527) 150 - 200 %

### Example 2

The components identified below are combined analogously to the methods described in example 1 to produce a homogenous mixture.
ADIPRENE LF750D 53.80g
DESMODUR N3400 23.06g
Isodecyl diphenyl phosphate 23.06g
BYK A530 0.08g (a degassing aid)
Dimethylthiotoluene diamine 24g

At 25°C viscosity of mixture is 1000 mPas
Properties after curing at 25°C for 7days:
Shore D hardness (ISO 868) 63 - 66
Tensile strength (ISO527) 25 - 30 MPa
Elongation at break (ISO527) 150-200%

### Example 3

Several plasticizers identified below were used in a mixture of 76.86 grams Adiprene LF750D, 0.1 grams BYK A530 and 17 grams dimethylthiotoluerte diamine. The mixtures are then introduced into a mould and cast into either a 400x75x100 mm bar or a 100 mm diameter circle having a 5 to 10 mm thickness. The mixtures are allowed to cure at ambient conditions for 16 hours. The resulting cured bars are demoulded and left on a flat surface. Distortion is shown when the ends of the cured bars curl upwards within three days of demoulding. The results of various plasticizers are shown below:

| Plasticizer | Amount (g) | Evaporation rate | Vapor pressure at 25°C (mm Hg) | Vapor pressure at 25°C (mPa) | Distortion of cured specimens |
|---|---|---|---|---|---|
| gamma-butyrolacto ne | 15.37 | | 0.3 | 40000 | Yes |
| Butyl glycol acetate | 15.37 | | 0.3 | 40000 | Yes |
| Dibasic ester | 12.3 | | 0.08 | 11000 | Yes |
| Propylene carbonate | 15.37 | | 0.08 | 11000 | Yes |
| Dibutyl phthalate | 23.06 | 44 | 0.0063 | 840 | Slight |
| Ethylhexyl diphenyl phosphate | 23.06 | 7.4 | 6x10⁻5 | 8 | No |
| Isodecyl diphenyl phosphate | 23.06 | 2.8 | 3x10-8 | 4x10-3 | No |
| tributoxy ethyl phosphate | 23.06 | 6.2 | 10-4 - 10-6 | 0.13 - 13 | No |

Preferred embodiments of the present invention relating to novel poly urethane/urea-forming compositions and methods for using the same have been described above. Those skilled in the art having the benefit of the teachings presented in the foregoing will recognize modifications and other embodiments. Therefore, it is understood that the invention is not limited to the specific embodiments disclosed herein, and that modifications and other embodiments are intended to be within the scope of the appended claims.

## Claims

1. A polyurethane/urea-forming casting composition that can be cast and cured at temperatures between 15 and 35°C comprising a reaction mixture of (a) an isocyanate component or an isocyanate functional prepolymer having at least two isocyanate groups per molecule that contains or has been reacted with polytetramethylene glycol; (b) an aromatic amine curative; and (c) a phosphate ester having a vapor pressure of less than 100 mPa at 25°C; **characterised in that** the phosphate ester is represented by formulae IIA or III 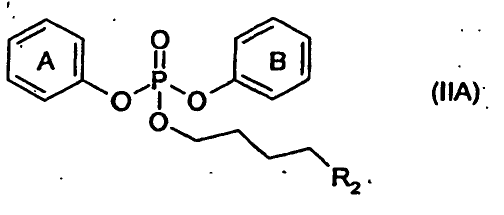 wherein R₂ is hydrogen or unsubstituted or alkyl-substituted C₂-C₆alkyl, and aromatic rings A and B independently of one another can have one or more alkyl substitutions, provided that the compound of formula IIA is not octyl diphenyl phosphate; 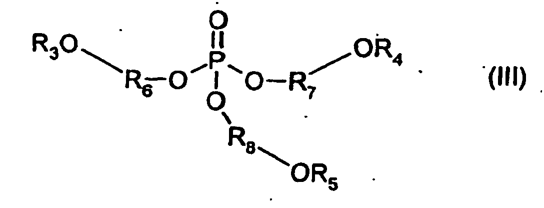 wherein R₃, R₄, R₅, independently from one another, are unsubstituted or alkyl substituted C₁-C₅ alkyl and R₆, R₇ and R₈ independently of one another are unsubstituted or alkyl-substituted C₁-C₅ alkylene.

2. A casting composition according to claim 1 wherein component (a) is a low free toluene diisocyanate prepolymer blend having a free toluene diisocyanate content below 0.4%.

3. A casting composition according to claim 2 wherein the reaction mixture comprises a prepolymer blend that is a reaction mixture of an organic diisocyanate and polytetramethylene glycol.

4. A casting composition according to any one of claims 1 to 3 wherein the aromatic amine curative is selected from the group consisting of diethyl toluene diamine, tertiary butyl toluene diamine, dimethylthiotoluene diamine, and 1,2-bis(2-aminophenylthio)ethane.

5. A casting composition according to claim 4 wherein the aromatic amine curative is dimethylthiotoluene diamine.

6. A casting composition according to any one of claims 1 to 5 further comprising a polyether- and/or polyester polyol having a number average molecular weight of at least 250.

7. A casting composition according to any one of claims 1 to 6 wherein component (c) is a phosphate ester of formula IIA in which R₂ represents an alkyl-substituted C₂-C₆ alkyl group.

8. A casting composition according to any one of claims 1 to 6 wherein component (c) is tributoxyethyl phosphate or isodecyl diphenyl phosphate.

9. A cast polyurethane obtainable by a process comprising reacting (a) an isocyanate component or an isocyanate functional prepolymer having at least two isocyanate groups per molecule that contains or has been reacted with polytetramethylene glycol; (b) an aromatic amine curative; and (c) a phosphate ester having a vapor pressure of less than 100 mPa at 25°C and the formula IIA or III as defined in claim 1.

10. A polyurethane casting according to claim 9 wherein component (a) is a low free toluene diisocyanate prepolymer blend having a free toluene diisocyanate content below 0.4%.

11. A polyurethane casting according to claim 10 wherein component (a) is a prepolymer blend resulting from a reaction mixture of an organic diisocyanate and polytetramethylene glycol.

12. A polyurethane casting according to any one of claims 9 to 11 wherein the aromatic amine curative is selected from the group consisting of diethyl toluene diamine, tertiary butyl toluene diamine, dimethylthiotoluene diamine, and 1,2-bis(2-aminophenylthio)ethane.

13. A polyurethane casting according to claim 12 wherein the aromatic amine curative is dimethylthiotoluene diamine.

14. A polyurethane casting according to any one of claims 9 to 13 wherein the process further comprises combining a polyether- and/or polyester polyol having a number average molecular weight of at least 250 with components (a), (b) and (c) .

15. A polyurethane casting according to any one of claims 9 to 14 wherein component (c) is a phosphate ester of formula IIA in which R₂ represents an alkyl-substituted C₂-C₆ alkyl group.

16. A polyurethane casting according to any one of claims 9 to 14 wherein component (c) is tributoxyethyl phosphate or isodecyl diphenyl phosphate.

17. A process for preparing a polyurethane casting as claimed in any one of claims 9 to 17, comprising contacting an isocyanate component or an isocyanate functional prepolymer having at least two isocyanate groups per molecule that contains or has been reacted with polytetramethylene glycol; with (a) an aromatic amine curative having at least two primary amine groups, and (b) a plasticizer having a vapor pressure of less than 100 mPa at 25°C and the formula IIA or III as defined in claim 1; at a temperature between 15 and 35°C.

18. A process as claimed in claim 17 carried out at room temperature.

## Patentansprüche

1. Polyurethan/Polyharnstoff bildende Gießzusammensetzung, die gegossen und gehärtet werden kann bei Temperaturen zwischen 15 und 35°C, umfassend ein Reaktionsgemisch von (a) einer Isocyanatkomponente oder einem Prepolymer mit funktionellen Isocyanatgruppen mit mindestens zwei Isocyanatgruppen pro Molekül, das enthält oder umgesetzt worden ist mit Polytetramethylenglykol; (b) einem aromatischen Aminhärter; und (c) einem Phosphatester, der einen Dampfdruck aufweist von weniger als 100 mPa bei 25 °C; **dadurch gekennzeichnet, dass** der Phosphatester durch die folgenden Formeln IIA oder III dargestellt wird 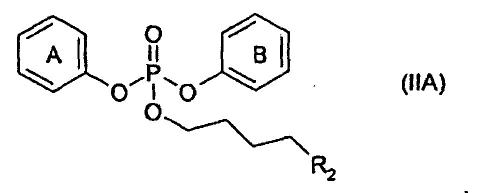 worin R₂ für Wasserstoff oder ein unsubstituiertes oder alkylsubstituiertes C₂-C₆-Alkyl steht, und die aromatischen Ringe A und B unabhängig voneinander ein oder mehr Alkylsubstitutionen aufweisen können, mit der Maßgabe, dass die Verbindung der Formel IIA nicht für Octyldiphenylphosphat steht; 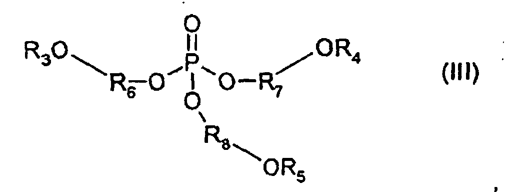 worin R₃, R₄, R₅, unabhängig voneinander für unsubstituiertes oder alkylsubstituiertes C₁-C₅-Alkyl stehen, und R₆, R₇ und R₈ unabhängig voneinander für unsubstituiertes oder alkylsubstituiertes C₁-C₅-Alkylen stehen.

2. Gießzusammensetzung gemäß Anspruch 1, worin die Komponente (a) für ein Prepolymergemisch mit wenig freiem Toluoldiisocyanat steht, das einen Gehalt an freiem Toluoldiisocyanat von weniger als 0,4 % aufweist.

3. Gießzusammensetzung gemäß Anspruch 2, worin das Reaktionsgemisch ein Prepolymergemisch umfasst, das ein Reaktionsgemisch ist von einem organischen Diisocyanat und Polytetramethylenglykol.

4. Gießzusammensetzung gemäß einem der Ansprüche 1 bis 3, worin der aromatische Aminhärter ausgewählt ist aus der Gruppe, bestehend aus Diethyltoluoldiamin, Tertiärbutyltoluoldiamin, Dimethylthiotoluoldiamin und 1,2-Bis(2-aminophenylthio)ethan.

5. Gießzusammensetzung gemäß Anspruch 4, worin der aromatische Aminhärter für Dimethylthiotoluoldiamin steht.

6. Gießzusammensetzung nach einem der Ansprüche 1 bis 5, die zusätzlich ein Polyether- und/oder Polyesterpolyol umfasst, das ein zahlenmittleres Molekulargewicht von mindestens 250 aufweist.

7. Gießzusammensetzung nach einem der Ansprüche 1 bis 6, worin die Komponente (c) für einen Phosphatester der Formel IIA steht, in der R₂ für eine alkylsubstituierte C₂-C₆-Alkylgruppe steht.

8. Gießzusammensetzung nach einem der Ansprüche 1 bis 6, wobei die Komponente (c) für Tributoxyethylphosphat oder Isodecyldiphenylphosphat steht.

9. Gegossenes Polyurethan, das erhältlich ist nach einem Verfahren, das umfasst ein Umsetzen von (a) einer Isocyanatkomponente oder einem Prepolymer mit funktionellen Isocyanatgruppen mit mindestens zwei Isocyanatgruppen pro Molekül, das enthält oder umgesetzt worden ist mit Polytetramethylenglykol; (b) einem aromatischen Aminhärter; und (c) einem Phosphatester, der einen Dampfdruck von weniger als 100 mPa bei 25°C und die Formel IIA oder III aufweist, wie in Anspruch 1 definiert.

10. Gusspolyurethan gemäß Anspruch 9, worin die Komponente (a) für ein Prepolymergemisch mit wenig freiem Toluoldiisocyanat steht, das einen Gehalt an freiem Toluoldiisocyanat von weniger als 0,4 % aufweist.

11. Gusspolyurethan gemäß Anspruch 10, wobei die Komponente (a) für ein Prepolymergemisch steht, das sich ergibt aus einem Reaktionsgemisch von einem organischen Diisocyanat und Polytetramethylenglykol.

12. Gusspolyurethan gemäß einem der Ansprüche 9 bis 11, worin der aromatische Aminhärter ausgewählt ist aus der Gruppe, bestehend aus Diethyltoluoldiamin, Tertiärbutyltoluoldiamin, Dimethylthiotoluoldiamin und 1,2-Bis(2-aminophenylthio)ethan.

13. Gusspolyurethan gemäß Anspruch 12, worin der aromatische Aminhärter für Dimethylthiotoluoldiamin steht.

14. Gusspolyurethan nach einem der Ansprüche 9 bis 13, worin das Verfahren zusätzlich umfasst ein Vereinigen eines Polyether- und/oder Polyesterpolyols, das ein zahlenmittleres Molekulargewicht von mindestens 250 aufweist, mit den Komponenten (a), (b) und (c).

15. Gusspolyurethan nach einem der Ansprüche 9 bis 14, worin die Komponente (c) für einen Phosphatester der Formel IIA steht, in der R₂ für eine alkylsubstituierte C₂-C₆-Alkylgruppe steht.

16. Gusspolyurethan nach einem der Ansprüche 9 bis 14, wobei die Komponente (c) für Tributoxyethylphosphat oder Isodecyldiphenylphosphat steht.

17. Verfahren zur Herstellung eines Gusspolyurethans, wie in einem der Ansprüche 9 bis 16 beansprucht, umfassend ein Kontaktieren einer Isocyanatkomponente oder eines Prepolymers mit funktionellen Isocyanatgruppen mit mindestens zwei Isocyanatgruppen pro Molekül aufweist, das enthält oder umgesetzt worden ist mit Polytetramethylenglykol; mit (a) einem aromatischen Aminhärter, der mindestens zwei primäre Amingruppen aufweist, und (b) einem Weichmacher, der einen Dampfdruck von weniger als 100 mPa bei 25 °C und die Formel IIA oder III aufweist, wie in Anspruch 1 definiert; bei einer Temperatur zwischen 15 und 35 °C.

18. Verfahren, wie in Anspruch 17 beansprucht, das bei Raumtemperatur ausgeführt wird.

## Revendications

1. Composition de moulage avec formation de polyuréthanne/urée qui peut être coulée et polymérisée à des températures entre 15°C et 35°C comprenant un mélange réactionnel de (a) un composant isocyanate ou un prépolymère fonctionnel isocyanate ayant au moins deux groupes isocyanates par molécule qui contient ou a réagi avec du polytétraméthylène glycol ; (b) un durcisseur amine aromatique ; et (c) un phosphate ester ayant une pression de vapeur de moins de 100 mPa à 25°C ; **caractérisé en ce que** le phosphate ester est représenté par les formules IIA ou III 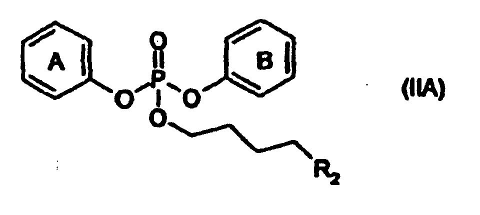 dans laquelle R₂ est l'hydrogène ou un groupe alkyle en C₂ à C₆ non substitué ou alkyl-substitué, et des cycles aromatiques A et B indépendants l'un de l'autre peuvent avoir une ou plusieurs substitutions alkyles, à condition que le composé de formule IIA ne soit pas le phosphate d'octyle et de diphényle ; 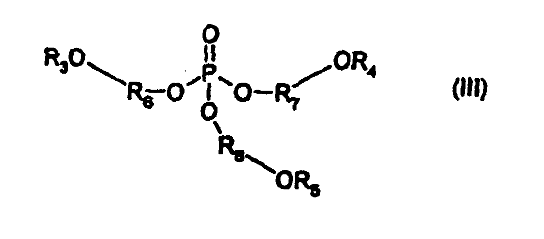 dans laquelle R₃, R₄, R₅, indépendants l' un de l'autre, représentent un groupe alkyle en C₁ à C₅ non substitué ou alkyl-substitué et R₆, R₇ et R₈, indépendants l' un de l'autre, représentent un groupe alkylène en C₁ à C₅ non substitué ou alkyl-substitué.

2. Composition de moulage selon la revendication 1, dans laquelle le composant (a) est un mélange prépolymère à faible teneur en toluène diisocyanate libre ayant une teneur en toluène diisocyanate libre inférieure à 0,4 %.

3. Composition de moulage selon la revendication 2, dans laquelle le mélange réactionnel comprend un mélange prépolymère qui est un mélange réactionnel d'un diisocyanate organique et de polytétraméthylène glycol.

4. Composition de moulage selon l'une quelconque des revendications 1 à 3, dans laquelle le durcisseur amine aromatique est choisie dans le groupe constitué de la diéthyltoluènediamine, la tert-butyltoluènediamine, la diméthylthiotoluènediamine, et la 1,2-bis(2-aminophénylthio)éthane.

5. Composition de moulage selon la revendication 4, dans laquelle le durcisseur amine aromatique est la diméthylthiotoluènediamine.

6. Composition de moulage selon l'une quelconque des revendications 1 à 5, comprenant de plus un polyol polyéther et/ou polyester ayant une masse moléculaire moyenne en nombre d'au moins 250.

7. Composition de moulage selon l'une quelconque des revendications 1 à 6, dans laquelle le composant (c) est un phosphate ester de formule IIA dans laquelle R₂ représente un groupe alkyle en C₂ à C₆ alkyl-substitué.

8. Composition de moulage selon l'une quelconque des revendications 1 à 6, dans laquelle le component (c) est le tributoxyéthylphosphate ou l'isodécyldiphénylphosphate.

9. Polyuréthane coulé pouvant être obtenu à partir d'un procédé comprenant la mise en réaction de (a) un composant isocyanate ou un prépolymère fonctionnel isocyanate ayant au moins deux groupes isocyanates par molécule qui contient ou a réagi avec du polytétraméthylène glycol ; (b) un durcisseur amine aromatique ; et (c) un phosphate ester ayant une pression de vapeur de moins de 100 mPa à 25°C et la formule IIA ou III comme définie dans la revendication 1.

10. Moulage en polyuréthanne selon la revendication 9, dans lequel le composant (a) est un mélange prépolymère à faible teneur en toluène diisocyanate libre ayant une teneur en toluène diisocyanate libre inférieure à 0,4 %.

11. Moulage en polyuréthanne selon la revendication 10, dans lequel le composant (a) est un mélange prépolymère résultant d'un mélange réactionnel d'un diisocyanate organique et de polytétraméthylène glycol.

12. Moulage en polyuréthanne selon l'une quelconque des revendications 9 à 11, dans lequel le durcisseur amine aromatique est choisi dans le groupe constitué de la diéthyltoluènediamine, la tert-butyltoluènediamine, la diméthylthiotoluènediamine, et la 1,2-bis(2-aminophénylthio)éthane.

13. Moulage en polyuréthanne selon la revendication 12, dans lequel le durcisseur amine aromatique est la diméthylthiotoluènediamine.

14. Moulage en polyuréthanne selon l'une quelconque des revendications 9 à 13, dans lequel le procédé comprend de plus un polyol polyéther et/ou polyester ayant une masse moléculaire moyenne en nombre d'au moins 250 avec les composants (a), (b) et (c).

15. Moulage en polyuréthanne selon l'une quelconque des revendications 9 à 14, dans lequel le composant (c) est un phosphate ester de formule IIA dans laquelle R₂ représente un groupe alkyle en C₂ à C₆ alkyl-substitué.

16. Moulage en polyuréthanne selon l'une quelconque des revendications 9 à 14, dans lequel le composant (c) est le tributoxyéthylphosphate ou l'isodécyldiphénylphosphate.

17. Procédé pour la préparation d'un moulage en polyuréthanne selon l'une quelconque des revendications 9 à 16, comprenant la mise en contact d'un composant isocyanate ou un prépolymère fonctionnel isocyanate ayant au moins deux groupes isocyanates par molécule qui contient ou a réagi avec du polytétraméthylène glycol ; avec (a) un durcisseur amine aromatique ayant au moins deux groupes amines primaires, et (b) un plastifiant ayant une pression de vapeur de moins de 100 mPa à 25°C et la formule IIA ou III comme définie dans la revendication 1 ; à une température entre 15 et 35°C.

18. Procédé selon la revendication 17 effectué à température ambiante.
